(19) **Europäisches Patentamt / European Patent Office / Office européen des brevets**

(11) **EP 3 163 925 B1**

(12) **EUROPEAN PATENT SPECIFICATION**

(45) Date of publication and mention
of the grant of the patent:
**09.09.2020 Bulletin 2020/37**

(51) Int Cl.:
*H04W 12/06* (2009.01)   *H04L 29/06* (2006.01)
*H04W 12/12* (2009.01)

(21) Application number: **15200543.5**

(22) Date of filing: **16.12.2015**

(54) **WIRELESS AUTHENTICATION METHOD AND APPARATUS**

DRAHTLOSES AUTHENTIFIZIERUNGSVERFAHREN UND VORRICHTUNG

PROCÉDÉ ET APPAREIL D'AUTHENTIFICATION SANS FIL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.10.2015 EP 15192404**

(43) Date of publication of application:
**03.05.2017 Bulletin 2017/18**

(73) Proprietor: **NXP B.V.**
**5656 AG Eindhoven (NL)**

(72) Inventors:
• **van Beek, Jozef Thomas Martinus**
**5656 AG Eindhoven (NL)**
• **Derom, Koen**
**5656 AG Eindhoven (NL)**
• **Klemans, Niels**
**5656 AG Eindhoven (NL)**

(74) Representative: **Miles, John Richard**
**NXP SEMICONDUCTORS**
**Intellectual Property Group**
**Abbey House**
**25 Clarendon Road**
**Redhill, Surrey RH1 1QZ (GB)**

(56) References cited:
**EP-A2- 2 800 068      WO-A2-2006/075280
US-A1- 2015 215 762**

• **CARLOS DE MARZIANI ET AL: "Simultaneous
Round-Trip Time-of-Flight Measurements With
Encoded Acoustic Signals", IEEE SENSORS
JOURNAL, IEEE SERVICE CENTER, NEW YORK,
NY, US, vol. 12, no. 10, 1 October 2012
(2012-10-01), pages 2931-2940, XP011480202,
ISSN: 1530-437X, DOI:
10.1109/JSEN.2012.2205675**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

This disclosure relates to a method and apparatus for the authentication of a wireless data communication between two devices.

Devices such as near field communication (NFC) devices are increasingly used for secure transactions for example to enter a building using a smart card, or for payment and so are targets for various forms of security attack. One form of attack, known as a "relay" or "man in the middle" (MITM) attack may be explained conceptually with the help of the Grand Master Chess problem. In this scenario, a person who does not know the rules of chess could play against two grand masters by challenging both of them to a postal game. The player would then simply forward the move received from one grand master to the other, effectively making them play against one another. Each grand master would think that they are playing said person, but in reality they are playing against each other.

This scenario can be translated for example to a NFC enabled secure transaction. A person "Bob" works in a high security building that he accesses using a NFC enabled smart card that is residing in his back pocket. When he approaches the door of a secured room, the card reader next to the door detects the presence of the smart card and initiates an exchange of messages that constitute a zero-knowledge password proof that the card is Bob's. The reader then allows Bob to enter the room.

A man-in-the-middle (MITM) "Mallory" wants to break into the room. Mallory approaches the room with a device that simulates a smart card, and the building responds by initiating the exchange of messages. Mallory is tailing Bob and relays the message to Bob's smart card, listens for the answer, and forwards the answer to the room's card reader. Continuing in this way, Mallory relays messages between the reader and Bob's smart card until the reader is satisfied that it is communicating with Bob's smart card. The door opens and Mallory enters.

Relay attacks are relatively easy to implement since very little system knowledge is required and a simple antenna and amplifier suffice for data pick-up and retransmission. In addition, relay attacks are very difficult to detect, since the MITM is almost perfectly transparent that is to say not observable by the legitimate sender and receiver. These factors make relay attack countermeasures difficult to implement.

EP2800068 (A2) discloses a passive entry passive start (PEPS) vehicle security system configured to thwart a relay attack on the system including one or more ultra wideband transceivers (UWBX) installed on a vehicle (14) and configured to transmit a request pulse at a request time.

DE MARZIANI, C. ET AL: "Simultaneous Round-Trip Time-of-Flight Measurements With Encoded Acoustic Signals", IEEE SENSORS JOURNAL, vol. 12, no. 10, October 2012, pages 2931-2940, presents a ranging system where only acoustic emissions are used to compute the distances between objects or nodes.

WO2006075280 (A2) discloses first and second devices, configured to transmit and receive signals wirelessly and have first and second clocks respectively for determining signal transmission and arrival times.

Various aspects of the invention are defined in the accompanying claims. In a first aspect there is defined a method for authenticating a wireless data communication between a first device and a second device, the method comprising determining a distance value from a round-trip time of flight of at least one beacon transmitted wirelessly between the first and second devices; determining a further distance value from a relative multipath delay of the at least one beacon; comparing the distance value and the further distance value; and authenticating a wireless data communication if the first distance value is not greater than and the further distance value according the comparison.

A beacon may be any signal which is used to indicate or advertise the presence of the device. The beacon may contain a data sequence identifying the device or may be a simple signal such as a chirp. The beacon may include a signal of a single or multiple frequencies.

The method may reliably detect potential man in the middle or relay attack over short distances using components that may already be present on a wireless data communication device. The distance or gap between two devices may be determined by at least two different methods and based on a comparison of the values determined, the presence of a relay device may be detected.

In embodiments the at least one beacon comprises a first beacon and a second beacon and the method further comprises transmitting the first beacon from the first device; receiving the second beacon by the first device, the second beacon being transmitted by a second device in response to the transmission of the first acoustic beacon; and wherein determining the distance value comprises determining the round trip time of flight from the time difference between transmitting the first beacon and receiving the second beacon.

In embodiments determining the further distance value further comprises determining at least three relative path delays of the second beacon.

In embodiments the method may further comprise receiving a first beacon; wherein determining the further distance value further comprises determining at least three relative path delays of the first beacon.

Determining three relative path delays allows the determination of a distance by determining a value of angle of arrival and thereby a distance value. Alternatively another triangulation calculation method may be used to determine the distance from the three relative path delays.

Embodiments may further comprise transmitting a second beacon from the first device in response to receiving the first beacon and receiving a third beacon, the third beacon being transmitted by the second device in response to the transmission of the second beacon and wherein determining the distance value comprises determining the round trip time of flight from the time difference between transmitting the second beacon and receiving the third beacon.

In embodiments, authenticating the wireless data communication may comprise aborting the data communication when the first distance value is different than the further distance value.

In embodiments authenticating the wireless communication link may comprise aborting communication when either of the first distance value or the further distance value is greater than a predetermined value.

Embodiments may include a non-transitory storage medium coupled to a processor and storing computer-executable instructions that when executed by a processor causes the processor to perform the steps of determining a distance value from a round-trip time of flight of at least one beacon transmitted wirelessly between the first and second devices; determining a further distance value from a relative multipath delay of the at least one acoustic beacon; authenticating a wireless data communication from the first distance value and the further distance value.

In embodiments, the method may be implemented in hardware, software, or a combination of hardware and software.

In a further aspect there is defined a wireless data communication device comprising: at least one wireless transceiver for transmitting and receiving a beacon; and a controller coupled to the at least the wireless transceiver; and wherein the controller is configured to determine a distance value from a round-trip time of flight of at least one beacon transmitted between the wireless data communication device and a further wireless data communication device; determine a further distance value from a relative multipath delay of the at least one beacon; compare the distance value and the further distance value; and authenticate a wireless data communication if the first distance value is not greater than the further distance value according to the comparison.

In embodiments, the at least one wireless transceiver may comprise a radio frequency (RF) transceiver configured to transmit and/or receive wireless data and at least one acoustic transducer configured to transmit and/or receive the at least one beacon; and wherein the controller is coupled to the at least one acoustic transducer and the RF transceiver and is configured to determine a distance value from a round-trip time of flight of the at least one beacon transmitted and/or received via the at least one acoustic transducer determine a further distance value from a relative multipath delay of the at least one beacon; and authenticate a wireless data communication via the RF transceiver from the first distance value and the further distance value.

In embodiments the wireless data communication device may be further operable to transmit a first beacon and to receive a second beacon, the second beacon being transmitted by the further wireless data communication device in response to the transmission of the first beacon; and the controller may be further configured to determine the distance value from the delay between the transmission of the first beacon and the reception of the second beacon.

In embodiments of the wireless data communication device the controller may be further configured to determine the further distance value from the at least three relative path delays of the second beacon.

In embodiments of the wireless data communication device the controller may be further configured to receive a first beacon via the acoustic transducer, the first beacon being transmitted by the further wireless data communication device and wherein the controller is further configured to determine the further distance value by determining at least three relative path delays of the first beacon.

In embodiments the wireless data communication device may be further configured to transmit a second beacon from the first device in response to receiving the first beacon and receiving a third beacon, the third beacon being transmitted by the further wireless data communication device in response to the transmission of the second beacon and wherein determining the distance value comprises determining the round trip time of flight from the time difference between transmitting the second acoustic beacon and receiving the third beacon.

In embodiments, the wireless data communication device may comprise at least four acoustic transducers and be configured to transmit the first beacon via the at least four acoustic transducers and to receive the second beacon via at least one of the at least four acoustic transducers.

In embodiments, the controller may be configured to abort at least one of a data transmission and data reception via the wireless transceiver if the first distance is greater than the second distance.

In embodiments, the wireless data communication device may be configured as one of an NFC tag and an NFC reader and operable to communicate with a further wireless data communication device configured as the other of an NFC tag and an NFC reader.

In embodiments of the wireless device may be included in a mobile phone configured as one of an NFC tag and an NFC reader and operable to communicate with a further wireless data communication device configured as the other of an NFC tag and an NFC reader.

In embodiments the wireless data communication device may also include NFC tags, RF-ID tags, RD-ID tag readers, or other data communication devices or any other device that transmits data wirelessly in particular via a radio frequency (RF) interface.

In the figures and description like reference numerals refer to like features. Embodiments are now described in detail, by way of example only, illustrated by the accompanying drawings in which:

Figure 1 shows a) a wireless transceiver system according to an embodiment b) the wireless transceiver system during an attempted relay attack according to an embodiment
Figure 2 shows a) a wireless transceiver system according to an embodiment b) the wireless transceiver system during an attempted relay attack according to an embodiment
Figure 3 shows a method of authenticating a communication between an NFC reader and NFC tag according to an embodiment
Figure 4 illustrates a method of authenticating a wireless communication according to an embodiment
Figure 5 shows a method of authenticating a wireless communication according to an embodiment.

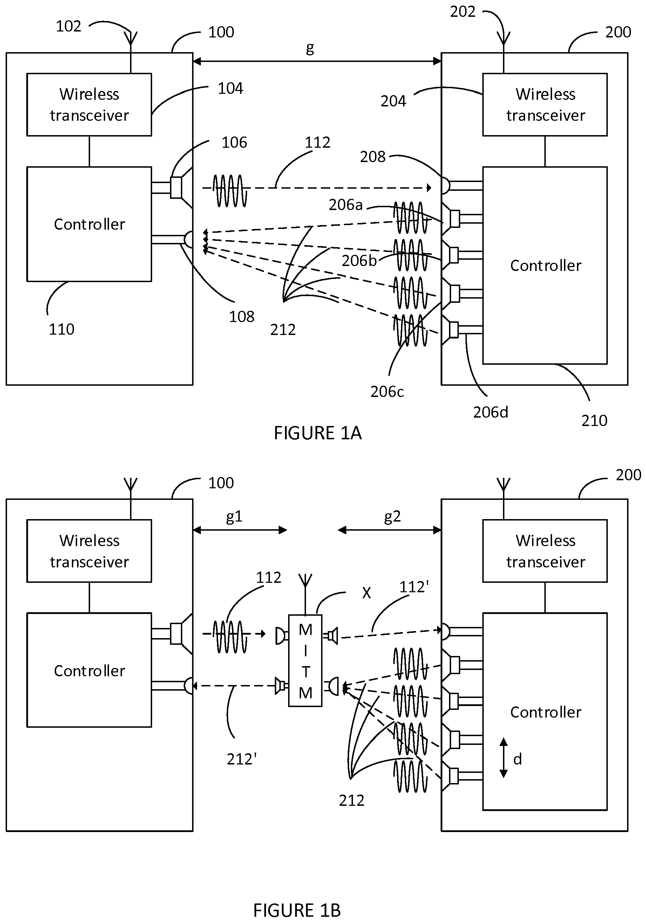

Figure 1A shows a transceiver device 100 for wireless data communication which may include an antenna 102 connected to a wireless transceiver 104 which may be radio frequency (RF) transceiver. A loudspeaker or speaker 106 may be connected to a controller 110. A microphone 108 may be connected to the controller 110. The transceiver device 100 may send and/or receive communications via the wireless transceiver 104 and antenna 102 to and from a second transceiver device 200.

The second transceiver device 200 for wireless data communication may include an antenna 202 connected to a wireless transceiver 204. A microphone 208 may become connected to a controller 210. A number of speakers or loudspeakers denoted 206a to 206d, in this case four speakers may be connected to a controller 210. The second transceiver device 200 may communicate to the first transceiver device 100 via the wireless transceiver 204 and the antenna 202. Up to three of the speakers 206a to 206d may be in a linear arrangement. At least one of the speakers may not be in line with the others..

In operation the transceiver device 100 may establish an initial communication between the transceiver device 100 and a second transceiver device 200 via the wireless transceiver 104 and the antenna 102. The controller 110 may generate an initial ultrasound signal to be transmitted via the loudspeaker 106 as an ultrasound signal or beacon 112. The ultrasound signal may have one or more frequencies in range starting between 20 kHz and 40 kHz. The ultrasound signal may have frequencies higher than 40 KHz. The ultrasound signal may contain a chirp or a pseudo-random frequency modulated sequence. The ultrasound signal 112 may be modulated with a predetermined data sequence which identifies the transceiver device 100. The first transceiver device 100 may subsequently receive a second ultrasound signal or beacon 212 via the microphone 108. The second ultrasound signal or beacon 212 may be generated by the controller 210, and transmitted via the speakers 206 of the second transceiver device 200.

The second ultrasound beacon 212 may be modulated with a predetermined data sequence which may be the same or different to that of the first ultrasound signal or beacon 112. In this example the second ultrasound beacon 212 may consist of a number of signals transmitted from different points of a second wireless transceiver 200 via respective loudspeakers 206a to 206d. The second ultrasound beacon 212 may include an identifier to indicate from which one of the respective loudspeaker 206a to 206d a particular signal was transmitted. The second ultrasound beacon 212 may be considered to include a number of correlated signals. Once the second ultrasound beacon 212 has been received by the controller 110 via the microphone 108, the controller may determine a distance or gap g between the first wireless transceiver 100 and the second wireless transceiver device 200 in two different ways. Firstly the controller 110 may determine a distance from the round trip time between transmitting the first ultrasound signal 112 and receiving second ultrasound signal 212. Knowing the speed of sound, in this instance the gap g between the two devices is given by

$$\text{Equation 1} \qquad\qquad \boldsymbol{g} = \boldsymbol{g_{tof}} = \boldsymbol{c}\frac{T_{rt}}{2}$$

Where c is the speed of sound and $T_{rt}$ is the round trip time of flight between the transceiver device 100 and the second transceiver device 200. Secondly the controller 110 may determine a distance from the angle of arrival of the second ultrasound beacon 212. The angle of arrival may be determined from the delay between the signals transmitted simultaneously from the different speakers, that is to say that the signals of the second ultrasound beacon are correlated. Denoting microphone 108 as m0, speaker 206a as s1, 206b as s2, 206c as s3 and 206d as s4, and time delays, Ts12, Ts13, and Ts14 as the time delay difference measured between s1-s2, s1-s3, and s1-s4, respectively are given by,

Equation 2

$$T_{s12} = \frac{\left|\overrightarrow{x_{s1m0}}\right| - \left|\overrightarrow{x_{s2m0}}\right|}{c}$$

$$T_{s13} = \frac{\left|\overrightarrow{x_{s1m0}}\right| - \left|\overrightarrow{x_{s3m0}}\right|}{c}$$

$$T_{s14} = \frac{\left|\overrightarrow{x_{s1m0}}\right| - \left|\overrightarrow{x_{s4m0}}\right|}{c}$$

Time delays Ts12, Ts13, and Ts14 may be considered as relative multipath delays due to the different distances over which the second ultrasound beacon 212 is transmitted by each of the speakers before detection by a microphone 108. Each of the respective signals of the second ultrasound beacon 212 may include an identifier to indicate from which speaker the signal was emitted and a distance d between the respective speakers 206a to 206d. Alternatively the distance d may be a predetermined fixed value which is always used by the wireless transceiver device to determine the distance from the delays between the signals in the second ultrasound beacon 212. Consequently these 3 equations have 3 unknowns and only the x, y, and z coordinates of microphone 108 are unknown. Therefore, solving this set of equations for x, y, and z allows the location of the microphone 108 with respect to the second wireless transceiver device 200 to be determined and thus calculate $g_{aoa}$. The value of the gap distance g calculated should be the same as for $g_{tof}$.

Alternatively, the distance may be directly determined from the delay between the signals in the second ultrasound beacon without explicitly calculating an angle of arrival.

One of the very few detectable characteristics of a relay attack, for example during a NFC data communication between an NFC reader and NFC tag is that it increases the time it takes for exchanging a packet of data between the legitimate sender and receiver. The increase of data transition time is attributed to two factors:

First, data sent by the NFC tag may be processed in some form before it is retransmitted to the NFC reader. This reprocessing of data by the MITM may take time and can therefore in principle delay the reception of a data package by the legitimate receiver. In its most simple form this reprocessing may happen fully in the analogue domain and consists of receiving the data from the MITM's receiving antenna and re-transmitting through a power amplifier that is connected to the MITM's transmitting antenna. For an NFC device, a detectable delay in the transmitted data may occur when the bandwidth of the MITM's transceiver is smaller than the standard bandwidth of the NFC link. However, the bandwidth of NFC is only a few MHz and consequently a MITM transceiver with a minimum bandwidth of a few MHz is easily realized using off-the-shelf components. It is therefore possible to reduce the MITM's induced timing delay to levels that are below intrinsic fluctuations in delay that are caused by the legitimate sender and receiver thereby making the detection of the MITM impossible.

A second cause of timing delay inferred by a relay attack is related to the increase in distance, Δl between sender and receiver. Transmitted data need to travel longer before they are received by the legitimate receiver. The timing delay, Δt is given by the relation,

Equation 3 $$\Delta t = \frac{\Delta l}{c}$$

The timing delay, Δt is inversely proportional to the propagation speed c. The propagation speed of any radio signal is bound to the speed of light, therefore timing delays are typically small. For example, a distance resolution Δl =10cm translates into a timing delay of Δt =0.3ns. In order to measure such small delays it is necessary that temporal transitions of the radio signal are in the same order magnitude as Δt. A 0.3ns transition translates into minimum bandwidth requirement of the sender-receiver chain of 3GHz. NFC has a bandwidth of about 2 MHz, which translates in to a spatial resolution of Δl =150m. Clearly, the bandwidth of NFC is insufficient to detect the roundtrip time with sufficient accuracy to detect a relay attack. Ultra-wide band (UWB) communication covers a very wide frequency band between 3 to 10GHz and has therefore sufficient spatial resolution, typically Δl = 4 cm to detect timing delays caused by a relay attack. The skilled person will appreciate that UWB may require special antennas and transceiver architectures.

A smartphone or any other NFC enabled handheld device, such as tablets and smart watches may be capable of recording and reproducing sound by means of build-in microphones and speakers. These audio transducers can in principle also be used for transmitting or recording of an inaudible signal that can be used for distance bounding. As such, the audio channel provides an auxiliary channel to NFC that can be used to check the location of the tag with respect to the reader.

Although the frequency bandwidth for sound or ultrasound is only a few tens of kHz, its spatial resolution is much better than NFC and comparable to UWB due to the much lower propagation speed of sound ($c_{sound}$=340m/s versus $c_{RF}$=3e$^8$m/s), as may be understood by rewriting Equation 3 into,

$$\text{Equation 4} \qquad\qquad \Delta l = \frac{c}{\Delta f}$$

A 10 cm spatial resolution translates into a (ultra)sound frequency bandwidth of only 3.4 kHz compared to 3 GHz for a radio signal. The low propagation speed and relaxed bandwidth requirement for (ultra)sound makes it possible to accurately measure distance between the legitimate sender and receiver and check for the presence of a MITM using ordinary audio speakers and microphones. A sound frequency bandwidth of 10 KHz may have a spatial resolution of approximately 3 cms.

Figure 1B illustrates the situation when a so called "man-in-the-middle" or relay attack is attempted during a secure transaction between the first device 100 and the second device 200. In this case, an extra relay device X is positioned in between the first transceiver device 100 and the second transceiver device 200. A first distance measurement based on the time of flight calculation may give a gap measurement value g of g1 + g2 corresponding to the distances of the air gaps between the first device 100 and the relay device X (g1) and the relay device X and the second device 200 (g2). A second distance measurement based on the angle of arrival calculation may result in a distance measurement $g_{aoa}$ equal to the distance g2 between the relay device X and the second device 200. The controller 110 may then compare $g_{tof}$ and $g_{aoa}$. If $g_{aoa}$ is less than $g_{tof}$, this indicates that a possible relay attack is occurring and so the controller 110 may then abort a wireless communication via the wireless transceiver 104. The controller 110 may for example abort the wireless communication by disabling the wireless transceiver 104. Alternatively or in addition the controller 110 may abort the wireless communication by issuing an abort command via the wireless transceiver to the second wireless transceiver device 200.

The wireless transceiver device 100 may be a mobile device such as a mobile phone, tag, smartcard or other NFC device or RF ID device. The controller 110 may be implemented as hardware, software or a combination of hardware and software. For example, the controller may be implemented by software algorithms running on a digital signal processor (DSP). If the device includes audio functionality as is the case for example in a mobile phone, the authentication system may be implemented without requiring additional components, since a speaker and microphone are already present. It will be appreciated that instead of a separate speaker and microphone, a single acoustic transducer may be used which can both transmit and receive acoustic waves. The second wireless transceiver device 200 may be a reader device such as an NFC reader.

Further, although ultrasonic signals are being generated and received, other frequencies of acoustic signals, for example audible sound and subsonic acoustic or sound waves may also be generated and detected. It will be appreciated that UWB signals or other RF signals may be used dependent on the distances.

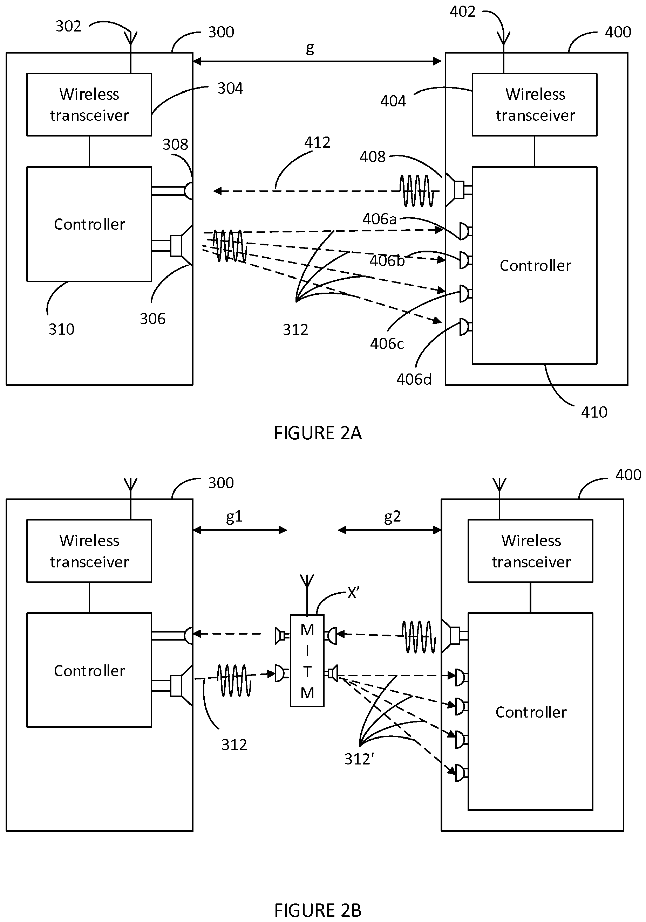

Figure 2A shows a transceiver device 300 for wireless data communication which may include an antenna 302 connected to a wireless transceiver 304. A loudspeaker or speaker 306 may be connected to a controller 310. A microphone 308 may be connected to the controller 310. The transceiver device 300 which may for example be a mobile phone, a RF tag, or other mobile device may send and/or receive communications via the wireless transceiver 304 and antenna 302.

A further transceiver device 400 which may for example be an NFC reader may include an antenna 402 connected to a wireless transceiver 404. A speaker 408 may be connected to a controller 410. Four microphones 406a to 406d may be connected to a controller 410. The transceiver device 400 may communicate to the transceiver device 300 via the wireless transceiver 404 and the antenna 402.

In operation the further transceiver device 400 may initiate an authentication sequence with transceiver device 300 as part of a secure transaction. The controller 410 may generate a first ultrasound signal or beacon 412 which may be emitted by the loudspeaker 408. The further transceiver device 400 may receive a second ultrasound beacon 312 transmitted by wireless transceiver device 300 in response to receiving the first ultrasound beacon. The second ultrasound beacon 312 may be detected by each of microphones 406a to 406d respectively at slightly different times. Once the second ultrasound beacon 312 has been detected, the controller 410 may determine a first distance $g_{tof}$ from the roundtrip time of flight using equation (1) as previously described. The controller 410 may determine a second distance from the angle of arrival of the second ultrasound beacon from the time delays between recording the second ultrasound beacon signal from the speaker 306 of the wireless transceiver device 300 by microphones, 406a to 406d. Denoting speaker 306 as s0, microphone 406a as m1, 406b as m2, 406c as m3 and 406d as m4, and time delays, Tm12, Tm13, and Tm14 as the time delay difference measured between m1-m2, m1-m3, and m1-m4, respectively are given by,

Equation 5

$$T_{m12} = \frac{\left|\overrightarrow{x_{m1s0}}\right| - \left|\overrightarrow{x_{m2s0}}\right|}{c}$$

$$T_{m13} = \frac{\left|\overrightarrow{x_{m1s0}}\right| - \left|\overrightarrow{x_{m3s0}}\right|}{c}$$

$$T_{m14} = \frac{\left|\overrightarrow{x_{m1s0}}\right| - \left|\overrightarrow{x_{m4s0}}\right|}{c}$$

Time delays Tm12, Tm13, and Tm14 may be considered as relative multipath delays due to the different distances over which the second ultrasound beacon 312 may be transmitted by the speaker 306 before detection by the respective microphones 406a to 406d.

These 3 equations have 3 unknowns and only the x, y, and z coordinates of speaker 306 are unknown. Therefore, solving this set of equations for x, y, and z allows to calculate the location of speaker 306 with respect to the wireless transceiver device 400 and thus calculate $g_{aoa}$. The value of the gap distance g calculated in both cases should be the same.

Figure 2B illustrates the situation when an attempted so called "man-in-the-middle" or relay attack is attempted during a secure transaction between the transceiver devices 300 and 400. In this case, an extra relay device X' is positioned in between the transceiver device 300 and the further transceiver device 400. A first distance measurement based on the time of flight calculation would give a distance of g1 + g2 corresponding to the distances of the air gaps between the wireless transceiver device 300 and the relay device X (g1) and the relay device X' and the further wireless transceiver device 400 (g2). A second distance measurement based on the angle of arrival calculation may result in a distance measurement $g_{aoa}$ equal to the distance g2 between the relay device X' and the device 400. The controller 410 may then compare gtof and $g_{aoa}$. If $g_{aoa}$ is less than gtof, this indicates that a possible relay attack is occurring and so the controller 410 may then abort a wireless communication via the wireless transceiver 404. The controller 410 may abort the wireless communication by disabling the wireless transceiver 404. Alternatively the controller 410 may abort the wireless communication by issuing an abort command via the wireless transceiver 404 to the wireless transceiver device 300.

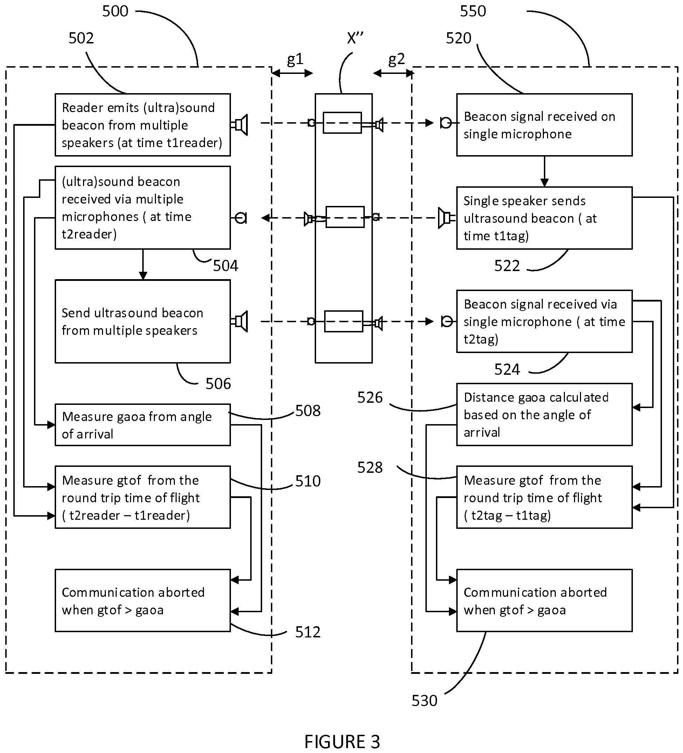

Figure 3 illustrates a method of authentication between two devices for example RF devices communicating over a short range. Examples of such devices are NFC devices or RF ID devices, such as smart cards, tags. In this example both devices may determine gap measurements. A first method may be implemented for example by an NFC reader 500. A second method may be implemented for example on an NFC tag 550 or a device such as a mobile phone which is configurable to emulate or operate as a NFC tag in addition to other functionality. In step 502, a reader may send out a first ultrasound beacon signal from multiple speakers at a time $t1_{reader}$. These ultrasound beacon signals may be received by the tag's microphone in step 520 and trigger the emission of an ultrasound beacon from the NFC tag 550 in step 522 at a time $t1_{tag}$. The beacon from NFC tag 550 may be received by multiple microphones of NFC reader 500 in step 504. The NFC reader 500 may record the time difference between the time it has emitted its own beacon $t1_{reader}$ and the time it receives the beacon from the NFC tag 550 $t2_{reader}$. Based on this roundtrip time, $T_{rt,reader} = t2_{reader} - t1_{reader}$, and knowing the speed of sound the NFC reader 500 may calculate $g_{ToF,reader}$ in step 510 according to equation 6

Equation 6 $$g_{ToF,reader} = c\frac{T_{rt,reader}}{2}$$

The distance determination from the angle of arrival $g_{AoA,reader}$ may be calculated in step 508 from the recorded time delays between the times that the microphones of NFC reader 500 have received the beacons from NFC tag 550 in step 504. In step 512 a comparison may be made between the time of flight distance measurement $g_{ToF,reader}$ and the angle of arrival distance measurement $g_{AoA,reader}$. If $g_{ToF,reader} > g_{AoA,reader}$ then a communication via an RF transceiver may be aborted.

After the reader has received the beacon signal from NFC tag 550 in step 504, it may transmit a beacon for a second time in step 506. The beacon may be received by a tag via a single microphone in step 524 at time t2tag. The distance $g_{AoA,tag}$ may be calculated in step 526 from the time delays between the beacon received by the NFC tag 550 from the multiple speakers of the NFC reader 500. The NFC tag 550 may calculate a distance value from the time of flight $g_{ToF,tag}$ in step 528 based on the roundtrip time, $T_{rt,tag} = t2_{tag} - t1_{tag}$.

$$\text{Equation 7} \qquad\qquad g_{ToF,tag} = c\,\frac{T_{rt,tag}}{2}$$

In summary, in operation if a relay device X" is placed between the NFC reader 500 and NFC tag 550, the NFC reader 500 may calculate a distance $g_{ToF,reader} = g1 + g2$ and a distance $g_{AoA,reader} = g1$. Accordingly the NFC reader 500 may abort a wireless communication when a MITM device X" is present and thus

$$\text{Equation 8} \qquad\qquad g_{ToF,reader} > g_{AoA,reader}$$

The communication may be aborted by the NFC tag 550 in the case

$$\text{Equation 9} \qquad\qquad g_{ToF,tag} > g_{AoA,tag}$$

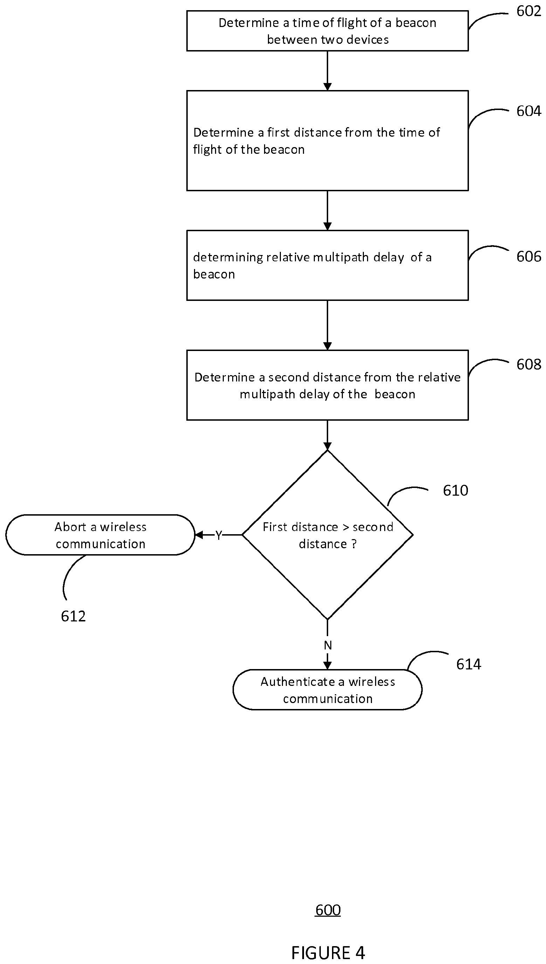

Figure 4 illustrates a method 600 of authenticating a wireless communication link between two devices which may be NFC devices, other RF transceiver devices or wireless data communication devices. In step 602 a time of flight of a wirelessly transmitted beacon which may be an ultrasound signal, other acoustic signal, an RF signal such as an ultra-wide band signal may be determined between two devices. In step 604 a first distance may be determined from the time of flight. In step 606 a relative multipath delay of a wireless beacon may be determined. In step 608 a second distance may be determined from the angle of arrival determined from the relative multipath delay of the signals of the wireless beacon. In step 610 a comparison may be made between the first distance calculated from the time of flight and the second distance calculated from the angle of arrival. If the first distance is greater than the second distance then the method moves to step 612 which may abort a wireless data communication between the two devices. The wireless data communication may for example be an NFC type short distance radio communication or RFID communication, another form of RF communication, or communication via acoustic waves. If the first distance is not greater than the second distance then the method moves to step 614 and the wireless communication between the two devices is authenticated. In this case the wireless data communication may proceed or continue. It will be appreciated that the method 600 may be implemented in hardware, software executable on a microprocessor or digital signal processor, or a combination of hardware and software.

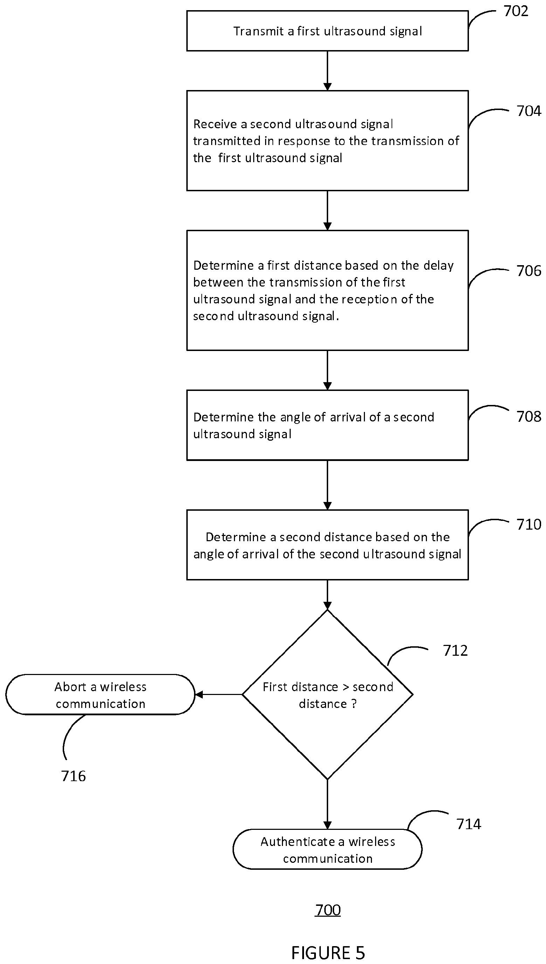

Figure 5 shows a method of authenticating a wireless communication between two devices 700. In step 702 an ultrasound beacon signal may be transmitted. In step 704, a second ultrasound beacon signal may be received, the second beacon ultrasound signal having been transmitted in response to the transmission of the first ultrasound beacon signal transmitted in step 702. In step 706 a first distance may be determined based on the delay between the transmission of the first ultrasound beacon signal and the reception of the second ultrasound beacon signal. In step 708 an angle of arrival may be determined from the second ultrasound beacon signal and in step 710 the second distance may be determined based on the angle arrival the second ultrasound beacon signal. In step 712 the first distance may be compared with the second distance. If the first distance is greater than the second distance the method may proceed to step 716 and the wireless communication may be aborted. Otherwise the method may proceed to step 714 and the wireless communication may be authenticated.

Although the appended claims are directed to particular combinations of features, it should be understood that the scope of the disclosure of the present invention also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention.

Features which are described in the context of separate embodiments may also be provided in combination in a single embodiment. Conversely, various features which are, for brevity, described in the context of a single embodiment, may also be provided separately or in any suitable sub combination.

The applicant hereby gives notice that new claims may be formulated to such features and/or combinations of such features during the prosecution of the present application or of any further application derived therefrom.

For the sake of completeness it is also stated that the term "comprising" does not exclude other elements or steps, the term "a" or "an" does not exclude a plurality, a single processor or other unit may fulfil the functions of several means recited in the claims and reference signs in the claims shall not be construed as limiting the scope of the claims.

**Claims**

1. A method for authenticating a wireless data communication between a first and second device (100, 200), the method comprising:

   determining a distance value from a round-trip time of flight of at least one beacon transmitted wirelessly between the first and second devices (100,200);
   determining a further distance value from a relative multipath delay of the at least one beacon;
   comparing the distance value and the further distance value; and
   authenticating a wireless data communication if the first distance value is not greater than the further distance value according to the comparison.

2. The method of claim 1 wherein the at least one beacon comprises a first beacon (112) and a second beacon (212) and the method further comprises:

   transmitting the first beacon from the first device (100);
   receiving the second beacon by the first device, the second beacon being transmitted by the second device (200) in response to the transmission of the first beacon; and wherein
   determining the distance value comprises determining the round trip time of flight from the time difference between transmitting the first beacon and receiving the second beacon.

3. The method of claim 2 wherein determining the further distance value further comprises determining at least three relative path delays of the second beacon (212).

4. The method of claim 1 further comprising:

   receiving a first beacon (112);
   wherein determining the further distance value further comprises determining at least three relative path delays of the first beacon (112).

5. The method of claim 4 further comprising transmitting a second beacon (212) from the first device (100) in response to receiving the first beacon (112) and receiving a third beacon, the third beacon being transmitted by the second device (200) in response to the transmission of the second beacon and wherein determining the distance value comprises determining the round trip time of flight from the time difference between transmitting the second beacon and receiving the third beacon.

6. The method of any preceding claim wherein authenticating the wireless communication link comprises aborting communication when the first distance value is different to the further distance value.

7. The method of any preceding claim wherein the at least one beacon comprises an acoustic signal.

8. A wireless data communication device (100) comprising:

   at least one wireless transceiver (104) for transmitting and receiving a beacon;
   a controller (110) coupled to the at least one wireless transceiver;
   wherein the controller is configured to

   determine a distance value from a round-trip time of flight of at least one beacon transmitted between the wireless data communication device and a further wireless data communication device (200);
   determine a further distance value from a relative multipath delay of the at least one beacon;
   compare the distance value and the further distance value; and
   authenticate a wireless data communication if the first distance value is not greater than the further distance value according to the comparison.

9. The wireless data communication device (100) of claim 8 wherein the at least one wireless transceiver comprises:

a RF transceiver configured to transmit and/or receive wireless data:

at least one acoustic transducer configured to transmit and/or receive the at least one beacon;
wherein the controller (110) is coupled to the at least one acoustic transducer and the RF transceiver;

and wherein the controller (110) is configured to

determine a distance value from a round-trip time of flight of the at least one beacon transmitted and/or received via the at least one acoustic transducer,
determine a further distance value from a relative multipath delay of the at least one beacon, and
authenticate a wireless data communication via the RF transceiver from the first distance value and the further distance value.

10. The wireless data communication device (100) of claim 8 or 9 further configured to transmit a first beacon (112) and to receive a second beacon (212), the second beacon being transmitted by the further wireless data communication device (200) in response to the transmission of the first beacon, and wherein the controller (110) is further configured to determine the distance value from the delay between the transmission of the first beacon and the reception of the second beacon.

11. The wireless data communication device (100) of claim 10 wherein the controller (110) is further configured to determine the further distance value from the at least three relative path delays of the second beacon (212).

12. The wireless data communication device (100) of claim 8 or 9 wherein the controller (110) is further configured to receive a first beacon (112), the first beacon being transmitted by the further wireless data communication device (200) and wherein the controller is further configured to determine the further distance value by determining at least three relative path delays of the first beacon.

13. The wireless data communication device (100) of claim 12 further configured to transmit a second beacon (212) from the first device in response to receiving the first beacon (112) and to receive a third beacon, the third beacon being transmitted by the further wireless data communication device (200) in response to the transmission of the second beacon, and wherein determining the distance value comprises determining the round trip time of flight from the time difference between transmitting the second beacon and receiving the third beacon.

14. The wireless data communication device (100) of any of claims 10 or 11 comprising at least four acoustic transducers coupled to the controller (110), wherein the controller is configured to transmit the first beacon (112) via the at least four acoustic transducers and to receive the second beacon (212) via at least one of the at least four acoustic transducers.

15. The wireless data communication device (100) of any of claims 8 to 14 wherein the controller (110) is configured to abort at least one of a data transmission and data reception via the wireless transceiver (104) if the first distance value is greater than the further distance value.

**Patentansprüche**

1. Verfahren zur Authentifizierung einer drahtlosen Datenkommunikation zwischen einer ersten und einer zweiten Vorrichtung (100, 200), wobei das Verfahren Folgendes umfasst:

Bestimmen eines Abstandswerts aus einer Umlaufzeit von zumindest einem drahtlos zwischen der ersten und zweiten Vorrichtung (100, 200) übertragenen Beacons;
Bestimmen eines weiteren Abstandswerts aus einer relativen Mehrfachpfadverzögerung des zumindest einen Beacons;
Vergleichen des Abstandswerts und des weiteren Abstandswerts; und
Authentifizieren einer drahtlosen Datenkommunikation, wenn der erste Abstandswert gemäß dem Vergleich nicht größer als der weitere Abstandswert ist.

**2.** Verfahren nach Anspruch 1, wobei der zumindest eine Beacon einen ersten Beacon (112) und einen zweiten Beacon (212) umfasst, und wobei das Verfahren ferner Folgendes umfasst:

Senden des ersten Beacons von der ersten Vorrichtung (100) ;
Empfangen des zweiten Beacons durch die erste Vorrichtung, wobei der zweite Beacon durch die zweite Vorrichtung (200) in Reaktion auf das Senden des ersten Beacons gesendet wird; und wobei
Bestimmen des Abstandswerts Bestimmen der Umlaufzeit aus der Zeitdifferenz zwischen Senden des ersten Beacons und Empfangen des zweiten Beacons umfasst.

**3.** Verfahren nach Anspruch 2, wobei Bestimmen des weiteren Abstandswerts ferner Bestimmen von mindestens drei relativen Pfadverzögerungen des zweiten Beacons (212) umfasst.

**4.** Verfahren nach Anspruch 1, das ferner Folgendes umfasst:

Empfangen eines ersten Beacons (112);
wobei Bestimmen des weiteren Abstandswerts ferner Bestimmen von mindestens drei relativen Pfadverzögerungen des ersten Beacons (112) umfasst.

**5.** Verfahren nach Anspruch 4, ferner umfassend Senden eines zweiten Beacons (212) von der ersten Vorrichtung (100) in Reaktion auf Empfangen des ersten Beacons (112) und Empfangen eines dritten Beacons, wobei der dritte Beacon durch die zweite Vorrichtung (200) gesendet wird in Reaktion auf das Senden des zweiten Beacons, und wobei Bestimmen des Abstandswerts Bestimmen der Umlaufzeit aus der Zeitdifferenz zwischen dem Senden des zweiten Beacons und Empfangen des dritten Beacons umfasst.

**6.** Verfahren nach einem der vorhergehenden Ansprüche, wobei Authentifizieren der drahtlosen Kommunikationsverbindung Abbrechen der Kommunikation umfasst, wenn der erste Abstandswert von dem weiteren Abstandswert verschieden ist.

**7.** Verfahren nach einem der vorhergehenden Ansprüche, wobei der zumindest eine Beacon ein akustisches Signal umfasst.

**8.** Drahtlose Datenkommunikationsvorrichtung (100), die Folgendes umfasst:

zumindest einen drahtlosen Sendeempfänger (104) zum Senden und Empfangen eines Beacons;
eine Steuerung (110), gekoppelt mit dem zumindest einen drahtlosen Sendeempfänger;
wobei die Steuerung ausgelegt ist zum:

Bestimmen eines Abstandswerts aus einer Umlaufzeit zumindest eines zwischen der drahtlosen Datenkommunikationsvorrichtung und einer weiteren drahtlosen Datenkommunikationsvorrichtung (200) übertragenen Beacons;
Bestimmen eines weiteren Abstandswerts aus einer relativen Mehrfachpfadverzögerung des zumindest einen Beacons;
Vergleichen des Abstandswerts und des weiteren Abstandswerts; und
Authentifizieren einer drahtlosen Datenkommunikation, wenn der erste Abstandswert gemäß dem Vergleich nicht größer als der weitere Abstandswert ist.

**9.** Drahtlose Datenkommunikationsvorrichtung (100) nach Anspruch 8, wobei der zumindest eine drahtlose Sendeempfänger Folgendes umfasst:

einen HF-Sendeempfänger, ausgelegt zum Senden und/oder Empfangen von drahtlosen Daten;
zumindest einen akustischen Wandler, ausgelegt zum Senden und/oder Empfangen des zumindest einen Beacons;
wobei die Steuerung (110) mit dem zumindest einen akustischen Wandler und dem HF-Sendeempfänger gekoppelt ist;
und wobei die Steuerung (110) ausgelegt ist zum:

Bestimmen eines Abstandswerts aus einer Umlaufzeit des zumindest einen über den zumindest einen akustischen Wandler gesendeten und/oder empfangenen Beacons;

Bestimmen eines weiteren Abstandswerts aus einer relativen Mehrfachpfadverzögerung des zumindest einen Beacons; und

Authentifizieren einer drahtlosen Datenkommunikation über den HF-Sendeempfänger aus dem ersten Abstandswert und dem weiteren Abstandswert.

10. Drahtlose Datenkommunikationsvorrichtung (100) nach Anspruch 8 oder 9, ferner ausgelegt zum Senden eines ersten Beacons (112) und zum Empfangen eines zweiten Beacons (212), wobei der zweite Beacon durch die weitere Datenkommunikationsvorrichtung (200) gesendet wird, in Reaktion auf das Senden des ersten Beacons, und wobei die Steuerung (110) ferner ausgelegt ist zum Bestimmen des Abstandswerts aus der Verzögerung zwischen dem Senden des ersten Beacons und dem Empfang des zweiten Beacons.

11. Drahtlose Datenkommunikationsvorrichtung (100) nach Anspruch 10, wobei die Steuerung (110) ferner ausgelegt ist zum Bestimmen des weiteren Abstandswerts aus den mindestens drei relativen Pfadverzögerungen des zweiten Beacons (212).

12. Drahtlose Datenkommunikationsvorrichtung (100) nach Anspruch 8 oder 9, wobei die Steuerung (110) ferner ausgelegt ist zum Empfangen eines ersten Beacons (112), wobei der erste Beacon durch die weitere drahtlose Datenkommunikationsvorrichtung (200) gesendet wird und wobei die Steuerung ferner ausgelegt ist zum Bestimmen des weiteren Abstandswerts durch Bestimmen von mindestens drei relativen Pfadverzögerungen des ersten Beacons.

13. Drahtlose Datenkommunikationsvorrichtung (100) nach Anspruch 12, ferner ausgelegt zum Senden eines zweiten Beacons (212) von der ersten Vorrichtung in Reaktion auf Empfangen des ersten Beacons (112) und Empfangen eines dritten Beacons, wobei der dritte Beacon durch die weitere drahtlose Datenkommunikationsvorrichtung (200) gesendet wird in Reaktion auf das Senden des zweiten Beacons, und wobei Bestimmen des Abstandswerts Bestimmen der Umlaufzeit aus der Zeitdifferenz zwischen dem Senden des zweiten Beacons und Empfangen des dritten Beacons umfasst.

14. Drahtlose Datenkommunikationsvorrichtung (100) nach einem der Ansprüche 10 oder 11, umfassend mindestens vier akustische Wandler, gekoppelt mit der Steuerung (110), wobei die Steuerung ausgelegt ist zum Senden des ersten Beacons (112) über die mindestens vier akustischen Wandler und zum Empfangen des zweiten Beacons (212) über zumindest einen der mindestens vier akustischen Wandler.

15. Drahtlose Datenkommunikationsvorrichtung (100) nach einem der Ansprüche 8 bis 14, wobei die Steuerung (110) ausgelegt ist zum Abbrechen von zumindest einem Datensenden und einem Datenempfang über den drahtlosen Sendeempfänger (104), wenn der erste Abstandswert größer als der weitere Abstandswert ist.

## Revendications

1. Procédé pour authentifier une communication de données sans fil entre un premier et un deuxième dispositif (100, 200), ce procédé comprenant :

   la détermination d'une valeur de distance à partir d'un temps aller-retour de vol d'au moins un signal de balise transmis sans fil entre le premier et le deuxième dispositif (100, 200) ;
   la détermination d'une autre valeur de distance à partir d'un retard par trajets multiples relatif de l'au moins un signal de balise ;
   la comparaison de la valeur de distance et de l'autre valeur de distance ; et
   l'authentification d'une communication de données sans fil si la première valeur de distance n'est pas plus grande que l'autre valeur de distance selon la comparaison.

2. Procédé selon la revendication 1, dans lequel l'au moins un signal de balise comprend un premier signal de balise (112) et un deuxième signal de balise (212) et ce procédé comprenant en outre :

   l'émission du premier signal de balise depuis le premier dispositif (100) ;
   la réception du deuxième signal de balise par le premier dispositif, le deuxième signal de balise étant émis par le deuxième dispositif (200) en réponse à l'émission du premier signal de balise ; et
   la détermination de la valeur de distance consistant en la détermination du temps aller-retour de vol à partir de la différence de temps entre l'émission du premier signal de balise et la réception du deuxième signal de balise.

3.  Procédé selon la revendication 2, dans lequel la détermination de l'autre valeur de distance comprend en outre la détermination d'au moins trois retards de trajet relatifs du deuxième signal de balise (212).

4.  Procédé selon la revendication 1, comprenant en outre :

    la réception d'un premier signal de balise (112) ;
    la détermination de l'autre valeur de distance comprenant en outre la détermination d'au moins trois retards de trajet relatifs du premier signal de balise (112) .

5.  Procédé selon la revendication 4, comprenant en outre l'émission du deuxième signal de balise (212) depuis le premier dispositif (100) en réponse à la réception du premier signal de balise (112) et la réception d'un troisième signal de balise, ce troisième signal de balise étant émis par le deuxième dispositif (200) en réponse à l'émission du deuxième signal de balise et la détermination de la valeur de distance consistant en la détermination du temps aller-retour de vol à partir de la différence de temps entre l'émission du deuxième signal de balise et la réception du troisième signal de balise.

6.  Procédé selon l'une quelconque des revendications précédentes, dans lequel l'authentification de la liaison de communication sans fil comprend l'interruption prématurée de la communication lorsque la première valeur de distance est différente de l'autre valeur de distance.

7.  Procédé selon l'une quelconque des revendications précédentes, dans lequel l'au moins un signal de balise consiste en un signal de balise acoustique.

8.  Dispositif de communication de données sans fil (100) comprenant :

    au moins un émetteur-récepteur sans fil (104) pour émettre et recevoir un signal de balise ;
    un contrôleur (110) couplé à l'au moins un émetteur-récepteur sans fil ;
    ce contrôleur étant configuré de façon à :

        déterminer une valeur de distance à partir d'un temps aller-retour de vol d'au moins un signal de balise transmis entre le dispositif de communication de données sans fil et un autre dispositif de communication de données sans fil (200) ;
        déterminer une autre valeur de distance à partir d'un retard par trajets multiples relatif de l'au moins un signal de balise ;
        comparer la valeur de distance et l'autre valeur de distance ; et à
        authentifier une communication de données sans fil si la première valeur de distance n'est pas plus grande que l'autre valeur de distance selon la comparaison.

9.  Dispositif de communication de données sans fil (100) selon la revendication 8, dans lequel l'au moins un émetteur-récepteur sans fil comprend :

    un émetteur-récepteur RF configuré de façon à émettre et/ou à recevoir des données sans fil ;
    au moins un transducteur acoustique configuré de façon à émettre et/ou à recevoir l'au moins un signal de balise ;
    le contrôleur (110) étant couplé à l'au moins un transducteur acoustique et à l'émetteur récepteur RF ;
    et le contrôleur (110) étant configuré de façon à :

        déterminer une valeur de distance à partir d'un temps aller-retour de vol de l'au moins un signal de balise émis et/ou reçu via l'au moins un transducteur acoustique ;
        déterminer une autre valeur de distance à partir d'un retard par trajets multiples relatif de l'au moins un signal de balise ; et à
        authentifier une communication de données sans fil via l'émetteur-récepteur RF à partir de la première valeur de distance et de l'autre valeur de distance.

10.  Dispositif de communication de données sans fil (100) selon la revendication 8 ou 9, configuré en outre de façon à émettre un premier signal de balise (112) et à recevoir un deuxième signal de balise (212), ce deuxième signal de balise étant émis par l'autre dispositif de communication de données sans fil (200) en réponse à l'émission du premier signal de balise, et le contrôleur (110) étant configuré en outre de façon à déterminer la valeur de distance à partir du retard entre l'émission de premier signal de balise et la réception du deuxième signal de balise.

**11.** Dispositif de communication de données sans fil (100) selon la revendication 10, dans lequel le contrôleur (110) est configuré en outre de façon à déterminer l'autre valeur de distance à partir d'au moins trois retards de trajet relatifs du deuxième signal de balise (212).

**12.** Dispositif de communication de données sans fil (100) selon la revendication 8 ou 9, dans lequel le contrôleur (110) est configuré en outre de façon à recevoir un premier signal de balise (112), ce premier signal de balise étant émis par l'autre dispositif de communication de données sans fil (200) et dans lequel le contrôleur est configuré en outre de façon à déterminer l'autre valeur de distance en déterminant au moins trois retards de trajet relatifs du premier signal de balise.

**13.** Dispositif de communication de données sans fil (100) selon la revendication 12, configuré en outre de façon à émettre un deuxième signal de balise (212) depuis le premier dispositif en réponse à la réception du premier signal de balise (112) et à recevoir un troisième signal de balise, ce troisième signal de balise étant émis par l'autre dispositif de communication de données sans fil (200) en réponse à l'émission du deuxième signal de balise et la détermination de la valeur de distance consistant en la détermination du temps aller-retour de vol à partir de la différence de temps entre l'émission du deuxième signal et la réception du troisième signal.

**14.** Dispositif de communication de données sans fil (100) selon l'une quelconque des revendications 10 ou 11, comprenant au moins quatre transducteurs acoustiques couplés au contrôleur (110), le contrôleur étant configuré de façon à émettre le premier signal de balise (112) via les au moins quatre transducteurs acoustiques et à recevoir le deuxième signal de balise (212) via au moins un des au moins quatre transducteurs acoustiques.

**15.** Dispositif de communication de données sans fil (100) selon l'une quelconque des revendications 8 à 14, dans lequel le contrôleur (110) est configuré de façon à interrompre prématurément au moins soit une émission de données, soit une réception de données via l'émetteur-récepteur sans fil (104) si la première valeur de distance est plus grande que l'autre valeur de distance.

FIGURE 1A

FIGURE 1B

FIGURE 2A

FIGURE 2B

500
502

X''
g1    g2

550
520

Reader emits (ultra)sound beacon from multiple speakers (at time t1reader)

Beacon signal received on single microphone

(ultra)sound beacon received via multiple microphones ( at time t2reader)

504

Single speaker sends ultrasound beacon ( at time t1tag)

522

Send ultrasound beacon from multiple speakers

506

Beacon signal received via single microphone ( at time t2tag)

524

Measure gaoa from angle of arrival

508

526

Distance gaoa calculated based on the angle of arrival

Measure gtof from the round trip time of flight ( t2reader – t1reader)

510

528

Measure gtof from the round trip time of flight ( t2tag – t1tag)

Communication aborted when gtof > gaoa

512

Communication aborted when gtof > gaoa

530

FIGURE 3

Determine a time of flight of a beacon between two devices — 602

Determine a first distance from the time of flight of the beacon — 604

determining relative multipath delay of a beacon — 606

Determine a second distance from the relative multipath delay of the beacon — 608

First distance > second distance ? — 610

Y → Abort a wireless communication

612

N → Authenticate a wireless communication — 614

600

FIGURE 4

```
┌─────────────────────────────────────┐
│   Transmit a first ultrasound signal │ ⌐ 702
└─────────────────────────────────────┘
                 │
                 ▼
┌─────────────────────────────────────┐
│ Receive a second ultrasound signal   │ ⌐ 704
│ transmitted in response to the       │
│ transmission of the first ultrasound │
│ signal                               │
└─────────────────────────────────────┘
                 │
                 ▼
┌─────────────────────────────────────┐
│ Determine a first distance based on  │ ⌐ 706
│ the delay between the transmission   │
│ of the first ultrasound signal and   │
│ the reception of the second          │
│ ultrasound signal.                   │
└─────────────────────────────────────┘
                 │
                 ▼
┌─────────────────────────────────────┐
│ Determine the angle of arrival of a  │ ⌐ 708
│ second ultrasound signal             │
└─────────────────────────────────────┘
                 │
                 ▼
┌─────────────────────────────────────┐
│ Determine a second distance based on │ ⌐ 710
│ the angle of arrival of the second   │
│ ultrasound signal                    │
└─────────────────────────────────────┘
                 │
                 ▼
              ◇ 712
        First distance > second
              distance ?
```

Abort a wireless communication  716

Authenticate a wireless communication  714

700

FIGURE 5

19

**EP 3 163 925 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2800068 A2

- WO 2006075280 A2

### Non-patent literature cited in the description

- **DE MARZIANI, C. et al.** Simultaneous Round-Trip Time-of-Flight Measurements With Encoded Acoustic Signals. *IEEE SENSORS JOURNAL,* October 2012, vol. 12 (10), 2931-2940